# EUROPEAN PATENT SPECIFICATION

(11) **EP 0 681 001 B1**
(45) Date of publication and mention of the grant of the patent: **12.08.1998**
(21) Application number: 94201269.1
(22) Date of filing: 06.05.1994
(51) Int. Cl.: C08L 69/00, C08K 3/34

(54) **Polycarbonate composition with improved slip behaviour; food packaging material and food containers**
Polycarbonat Zusammensetzung mit verbessertem Gleitverhalten; Verpackungsmaterial und Behälter für Lebensmittel
Composition de polycarbonate à comportement de glissement amélioré, matériau d'emballage et conteneurs pour produits alimentaires

(43) Date of publication of application: 08.11.1995
(73) Proprietor: GENERAL ELECTRIC COMPANY, Schenectady, NY 12345 (US)
(72) Inventor: Maas, Christianus Johannes Jacobus, NL-4600 AC Bergen op Zoom (NL); Fontana, Luca Pietro, NL-4600 AC Bergen op Zoom (NL); van Hout, Henricus Hubertus Maria, NL-4600 AC Bergen op Zoom (NL)
(74) Representative: Grever, Frederik

(56) References cited:
- FR-A- 1 456 982
- PATENT ABSTRACTS OF JAPAN vol. 16, no. 265 (C-0951) 16 June 1992 & JP-A-04 063 861 (SUMITOMO NAUGATUCK CO LTD) 28 February 1992

## Description

The present invention relates to a polycarbonate composition comprising A) an aromatic polycarbonate, B) 0.02 to 0.08 % by weight of a Fischer-Tropsch wax and C) 0.04 to 0.15 % by weight talc.

The invention further relates to a food packaging material made out of the polycarbonate composition of the invention and to food containers made out of the polycarbonate composition of the invention.

Articles like food containers and packaging films made out of thermoplastic materials often show the undesired property of sticking together. This property is in particular a problem with modern food packaging systems where high speeds are required.

It has been proposed to make thermoplastic materials less prone to this sticking problem by incorporating in the composition additives. JP-A-4/239 055 proposes (as indicated in the Derwent Abstract thereof) to incorporate in a polyurethane resin, which can be of the polycarbonate type polyurethane, a silicone resin powder together with a wax of a higher fatty acid amide with unsaturated bonds. The additives give the material and sheet made thereof improved slip properties.

JP-A-04/-63 861 describes polymer compositions based on aromatic polycarbonates. Said compositions comprise fine silica and an ester of an aliphatic saturated monocarboxylic acid with an aliphatic saturated monoalcohol or polyalcohol. The described compositions have good transparency, slip and blocking resistance properties. The compositions are suitable for film production.

Polycarbonate compositions used for the manufacture of food packaging materials and food containers should meet for a lot of applications the following requirements: transparency, compliance with regulations concerning contact with food and good slip properties.

The invention deals with a novel polycarbonate composition meeting the above requirements. As stated above the composition of the invention comprises the following constituents:
A) an aromatic polycarbonate;
B) 0.03 to 0.05 % by weight of a Fischer-Tropsch wax ;
C) 0.05 to 0.15 % by weight talc.

The composition according to the invention may comprise further additives.

### A) The polycarbonate

Aromatic polycarbonates are materials known per se. They are generally prepared by reacting a dihydric phenol compound with a carbonate precursor, for example, phosgene, a halogen formate or a carbonate ester. Aromatic polycarbonates are polymers which comprise units of the formula 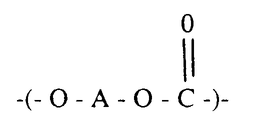 wherein A is a bivalent aromatic radical which is derived from the dihydric phenol used in the preparation of the polymer. Dihydric phenols which may be used in the preparation of the aromatic polycarbonates are mononuclear or polynuclear aromatic compounds which comprise two hydroxy radicals each directly bonded to a carbon atom of an aromatic nucleus. Said dihydric phenols may be substituted with one or more halogene atoms or one or more alkylgroups.

Branched polycarbonates known per se, as described, for example in US-A-4,001,184, are also suitable.

Suitable aromatic polycarbonates are also the so-called polyester carbonates which are obtained by performing the polymerization reaction in the presence of an ester precursor, for example, a difunctional carboxylic acid, for example, terepththalic acid or an ester-forming derivative thereof. These polyester carbonates have ester bonds and carbonate bonds in the polymeric chain. Polyester carbonates are described, for example, in US-A-3,169,121.

It is also possible to use a mixture of various polycarbonates.

### B) The Fischer-Tropsch wax

The polymer composition according to the invention should comprise a Fischer-Tropsch wax.

Fischer-Tropsch wax is described in Kirk-Othmer, Encyclopedia of Chemical Technology, third edition, Volume 24, pages 473 to 478 inclusive. Most suitable waxes are solid at 25 degrees C.

### c) Talc

Any quality of talc suitable for incorporation in thermoplastic compositions can be used. The preferred talc has a particle size between 2 and 30 micrometer.

In addition to the above mentioned components the composition according to the invention may comprise usual additives like stabilizers, mold release agents, light stabilizers, flame retardants.

It is essential that the wax and the talc are present in the quantities as indicated in the claims. When the concentration of the paraffine wax and the talc are below the indicated minimum values the compositions and the articles made there out show insufficient slip properties. When the concentrations are above the indicated maximum values the transparency becomes less and the articles formed out of the composition become hazy.

The polycarbonate compositions according to the invention can be made in any conventional way for the preparation of polycarbonate based polymer compositions. The compositions are preferably prepared by compounding the components in an extruder.

The invention will be illustrated by the following examples.

### Examples

An aromatic polycarbonate homopolymer derived from Bisphenol A and phosgene with an intrinsic viscosity of 53 ml/g as measured in MeCl₂ at 25 degrees Centigrade, was compounded into different compositions while adding a tris(di-t-butyl phenyl) phosphite type of stabilizer ( 0.06 % by weight) and while adding different additives as listed in the following tables. The extrudate was pelletized. Part of the obtained pellets were extruded into a sheet with a thickness of 0.2mm. Another part was molded into plaques with a thickness of 2.5 mm for the determination of haze.

The slip property of the obtained sheets was measured by hand by rubbing the sheet together. In this way it was easy to distinguish four different grades of this property (see table). In the first series of tests the transparency and the clarity of the sheet were judged visually. In the second series of tests the haze was determined in accordance with ASTM D 1003 on the plaques with a thickness of 2.5 mm.

The results of the first series of tests are reported in table A; the results of the second series in table B.

**TABLE A (comparative examples)**

| Composition Additives added | Slip Properties¹ | Transparency² |
|---|---|---|
| • None | --- | + |
| | | |
| • +0.2 % by weight ethylene-bis-stearamide | +-- | + |
| | | |
| • + 0.4 % by weight of a poly-alpha olefine with a viscosity of 8 centistokes | --- | + |
| | | |
| •+ 0.3 % by weight dimethylsiloxane | +++ | - |
| | | |
| • + 0.3 % by weight pentaerythritoltetrastearate (PETS) | +-- | + |

| | | |
|---|---|---|
| 1. +++ very good slip behaviour ++- reasonably good slip behavior +-- sticky --- Sticking/blocking | | |
| 2. + transparent - hazy | | |

It can be seen from the Table that the addition of common release agents like PETS , poly-alpha olefines and ethylene bis stearamide wax does not give the desired combination of properties i.e. transparency and good slip properties. Actually it was amazing to notice that such common release agents do give such bad slip properties: it would have been expected that release agents would improve slip properties.

In the following Table B several compositions have been tested with the components as claimed in the composition of the invention.

**TABLE B 5**

| Composition Additives added | Slip Properties¹ | Haze³ |
|---|---|---|
| • none (no. 1) | --- | 2.0 |
| • 0.05% wax4 + 0.1% talc (no. 2) | +++ | 2.9 |
| • 0.05% wax4 (no. 3) | --- | 2.7 |
| • 0.03% wax4 + 0,1% talc(no. 4) | +++ | 2.7 |
| • 0.01% wax4 + 0,1% talc (no. 5) | +-- | 2.2 |
| • 0.05% wax4 + 0.05% talc (no. 6) | ++- | 2.7 |
| • 0.03% wax4 + 0.05% talc (no. 7) | ++- | 2.4 |

| | | |
|---|---|---|
| Haze³ as measured according to ASTM D 1003 | | |
| Wax⁴ : a synthetic polymethylene wax (Fischer-Tropsch) 5: compositions no 1, 3, and 5 are comparative examples. | | |

The compositions 1, 3 and 5 do not meet the requirements of the invention since they show a sticky to sticking behavior.
As can be seen by comparing compositions 2, 4, 6 and 7 it is possible to obtain a proper balance of slip properties and haze with the compositions of the invention.

## Claims

1. Polycarbonate composition comprising A) an aromatic polycarbonate, B) 0.02 to 0.08 % by weight of a Fischer-Tropsch wax and C) 0.04 to 0.15 % by weight talc.

2. Polycarbonate composition of Claim 1 comprising a polycarbonate derived from bisphenol A.

3. Polycarbonate composition of Claim 1 comprising a Fischer-Tropsch wax with a molecular weight of 600-950.

4. Food packaging material made out of a polycarbonate composition of Claim 1.

5. Food container made out of a polycarbonate composition of Claim 1.

## Patentansprüche

1. Polycarbonatzusammensetzung aufweisend A) ein aromatisches Polycarbonat, B) 0,02 bis 0,08 Gewichts-% eines Fischer-Tropsch Wachses und C) 0,04 bis 0,15 Gewichts-% Talk.

2. Polycarbonatzusammensetzung nach Anspruch 1, die ein Polycarbonat aufweist, welches von Bisphenol A abgeleitet ist.

3. Polycarbonatzusammensetzung nach Anspruch 1, die ein Fischer-Tropsch Wachs mit einem Molekulargewicht von 600 bis 950 aufweist.

4. Nahrungsmittelpackungsmaterial, das aus einer Polycarbonatzusammensetzung nach Anspruch 1 hergestellt ist.

5. Nahrungsmittelbehälter, der aus einer Polycarbonatzusammensetzung nach Anspruch 1 hergestellt ist.

## Revendications

1. Composition de polycarbonate comprenant A) un polycarbonate aromatique, B) de 0,02 à 0,08 % en poids d'une cire de Fischer-Tropsch et C) de 0,04 à 0,15 % en poids de talc.

2. Composition de polycarbonate selon la revendication 1, comprenant un polycarbonate dérivé du bisphénol A.

3. Composition de polycarbonate selon la revendication 1, comprenant une cire de Fischer-Tropsch dont la masse moléculaire est comprise entre 600 et 950.

4. Matériau d'emballage alimentaire fabriqué à partir d'une composition de polycarbonate selon la revendication 1.

5. Récipient alimentaire fabriqué à partir d'une composition de polycarbonate selon la revendication 1.
